# EUROPEAN PATENT APPLICATION

(11) **EP 4 737 876 A1**
(43) Date of publication of application: **06.05.2026**
(21) Application number: 24209767.3
(22) Date of filing: 30.10.2024
(51) Int. Cl.: G01M 3/00

(54) **METHOD FOR DETECTING A GAS EMISSION AND DETECTING DEVICE**

(71) Applicant: Schaeffler Technologies AG & Co. KG, 91074 Herzogenaurach (DE)
(72) Inventor: DEPAYE, Thibault, 4052 Beaufays (BE); HEUSSCHEN, Kevin, 4100 Seraing (BE)
(74) Representative: Schaeffler Technologies

(57) **Abstract**

The present invention relates to a method for detecting a gas emission from a system, the method comprising the steps of providing a transparent or translucent carrier with a thermochromic layer on one side of the carrier and a heater on either side of the carrier, the thermochromic layer having an initial colour, placing the side of the carrier supporting the thermochromic layer facing the system, heating the thermochromic layer with the heater, the thermochromic layer colour changing to another colour due to an increase of temperature, operating the system, detecting a gas emission by determining a colour change of the thermochromic layer viewed through the transparent or translucent carrier due to the cooling of the thermochromic layer by the gas emission from the system. The invention also relates to a detecting device to detect gas emission.

## Description

### Technical field

The invention relates to a method and a device for detecting a gas emission from a system.

### Prior art

In the field of printheads, such systems are tested once manufactured. Currently, this test process is done with the same powders that are used for printing. The problem is that these powders are expensive and toxic. The debugging operator needs to wear proper personal protective equipment and clean the print head after debugging. This is annoying and time consuming. Moreover, problems in the ejection matrix of the printheads are only revealed at a late stage of the manufacture.

Therefore, there is a need to develop a method to test the ejection matrix as soon as they are manufactured, before installing them in the print head. More generally, there is a need to develop a method to test a system at an early manufacturing stage. This test method also needs to be safe for the operator, so that there is no need to wear personal protective equipment.

### Disclosure of the invention

A first object of the invention is to provide a method for detecting a gas emission from a system, the method comprising the steps of providing a transparent or translucent carrier with a thermochromic layer on one side of the carrier and a heater on either side of the carrier, the thermochromic layer having an initial colour; placing the side of the carrier supporting the thermochromic layer facing the system; heating the thermochromic layer with the heater, the thermochromic layer colour changing to another colour due to an increase of temperature; operating the system; detecting a gas emission by determining a colour change of the thermochromic layer viewed through the transparent or translucent carrier due to the cooling of the thermochromic layer by the gas emission from the system.

According to an embodiment, the carrier has an additional layer of opaque colour paint, the thermochromic layer being between the opaque colour paint layer and the carrier.

According to an embodiment, a power supply is adjustable to change the sensitivity of detecting the gas emission.

According to an embodiment, the method further comprises detecting and evaluating colour distribution of thermochromic layer, with an optical device and/or with naked eye, through the carrier and heater.

According to an embodiment, the color change due to the cooling of the thermochromic layer is reversible.

According to an embodiment, the gas emission is a gas leakage or a gas ejection.

According to an embodiment, the system is a printhead with a matrix of ejection nozzles, the method detecting gas ejection and/or gas leakage through the printhead.

According to an embodiment, the method further comprises an evaluation algorithm comprising:
- After heating the thermochromic layer and before operating the printhead, the method further comprising a step of taking an initial image of the side of the carrier supporting the thermochromic layer, the initial image being taken through the carrier,
- Operating the printhead comprises setting all of the ejection nozzles of the matrix to the closed state and then enabling an ejection pressure,
- Determining a colour change comprises taking a test image of the thermochromic layer through the carrier after operating the printhead and identifying the areas with colour changes between the test image and the initial image.

According to an embodiment, the method further comprises correlating the area(s) with colour change(s) with the nearest nozzle(s) to tag the nozzle(s) as being not able to close.

According to an embodiment, the method further comprises determining area of colour change that is not in an expected nozzle place and correlating said area with a leak in a sealing material of the print head.

According to an embodiment, the method further comprises an evaluation algorithm comprising
- After heating the thermochromic layer and before operating the printhead, the method further comprising a step of taking an initial image of the side of the carrier supporting the thermochromic layer, the initial image being taken through the carrier,
- Operating the printhead comprises setting all of the ejection nozzles of the matrix to the eject state and then enabling an ejection pressure,
- Determining a colour change comprises taking a test image of the thermochromic layer through the carrier after operating the printhead and identifying the areas without colour changes between the test image and the initial image.

According to an embodiment, the method further comprises correlating the area(s) without colour change(s) with the nearest nozzle(s) to tag the nozzle(s) as being not able to eject.

The invention also relates to a detecting device to detect gas emission from a system, the device comprising a transparent or translucent carrier, a transparent or translucent heater on either side of the carrier, a thermochromic layer on one side of the carrier, the thermochromic layer having an initial colour, the thermochromic layer colour being configured
- to change to another colour due to an increase of temperature caused by the heater, and
- to change to the initial color due to the cooling of the thermochromic layer by the gas emission from the system.

According to an embodiment, the carrier is rigid or flexible and/or is held by a support structure that is rigid or articulated.

According to an embodiment, the heater is a transparent conductive coating or a wired conductor.

In the framework of this document, the use of the indefinite article "a", "an" or the definite article "the" to introduce an element does not exclude the presence of a plurality of these elements. In this document, the terms "first", "second", "third" and the like are solely used to differentiate elements and do not imply any order in these elements.

In the framework of the present document, the use of the verbs "comprise", "include", "involve" or any other similar variant, as well as their conjugational forms, cannot exclude the presence of elements other than those mentioned. When the verb "comprise" is used for defining an interval by the terms "comprised between" two values, these two values should not be interpreted as excluded from the interval.

All the embodiments of the method for detecting a gas emission according to the invention and the advantages of these embodiments apply mutatis mutandis to the present device for detecting a gas emission, and vice-versa, according to the invention.

### Brief description of the figures

Other characteristics and advantages of the present invention will appear on reading the following detailed description, for the understanding of which, it is referred to the attached figures where:
- Figure 1 illustrates a device for detecting a gas emission according to an embodiment of the invention;
- Figure 2 illustrates an embodiment of the gas emission detection;
- Figure 3 illustrates another embodiment of the gas emission detection.

The drawings in the figures are not scaled. Similar elements can be assigned by similar references in the figures. In the framework of the present document, identical or analogous elements may have the same references. The presence of reference numbers in the drawings cannot be considered to be limiting, in particular if these numbers are indicated in the claims.

### Description of specific embodiments of the invention

Description of preferred embodiments of the present invention are hereafter described with references to figures, but the invention is not limited by these references. In particular, the drawings or figures described below are only schematic and are not limiting in any way.

The invention relates to a method for detecting a gas emission from a system. The method comprises the steps of providing a transparent or translucent carrier with a thermochromic layer on one side of the carrier and a heater on either side of the carrier, the thermochromic layer having an initial colour ("unheated color" or "unheated state" colour). Then the method comprises the step of placing the side of the carrier supporting the thermochromic layer facing the system and heating the thermochromic layer with the heater, the thermochromic layer colour changing to another colour due to an increase of temperature ("heated colour" or "unheated state" colour). Then the method further comprises the step of operating the system and detecting a gas emission by determining a colour change of the thermochromic layer viewed through the transparent of translucent carrier due to the cooling of the thermochromic layer by the gas emission from the system. The method makes it possible to test the system at an early manufacturing stage. The method is safe for the operator so that there is no need to wear personal protective equipment.

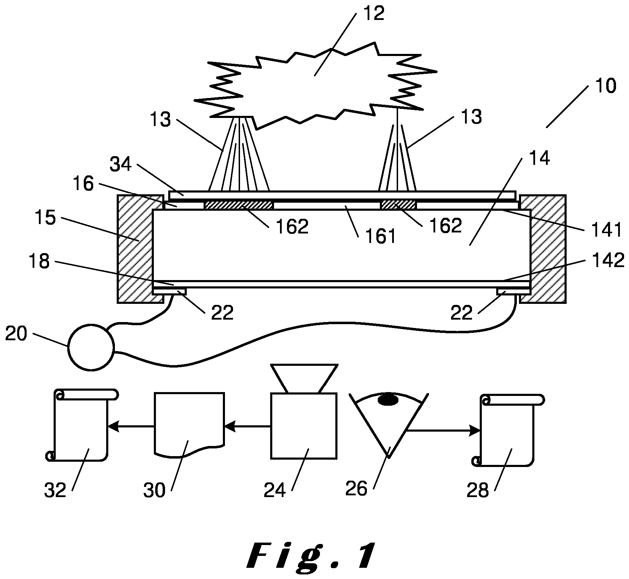

Figure 1 illustrates a device 10 for detecting a gas emission according to an embodiment of the invention. The device 10 is a gas emission detector. The device 10 can detect an emission of any type of gas emitted by a system 12. The system 12 may be a pipeline, flange, tank, valve, printhead, etc.. The device 10 and method according to the invention test correct operation of the system 12. Furthermore, the invention is not sensitive to the emitted gas or the composition of the emitted gas. For example, it is possible to detect compressed air, nitrogen, natural gas, oxygen, argon and others or a mixture thereof. The method and device for detecting gas emission work without chemical reaction with tested gas.

The gas emission (or in other words the gas discharge or gas release) from system 12 is the projection of gas out of the system. This projection may be desired or undesired. For example, the gas emission may correspond to a gas leakage from the system 12. Such an emission is undesirable. A gas leakage in a pipeline, flange, tank, valve or printhead (for example at the interface between two elements or at a sealing material) must be detected and repaired. Gas emission may also correspond to gas ejection from the system 12, which may be desired. The gas ejection may be due to the purpose of the system 12. If gas ejection does not occur, repair is desirable.

The device 10 comprises a carrier 14. The carrier 14 is transparent or translucent so as to allow through detection. In other words, it is possible to detect from one side of the carrier 14 an event such as a gas emission occurring on the other side of the carrier 14. Thus, this simplifies the detection of gas emission. The carrier 14 is, for example, rigid or flexible so as to adapt to the system 12 to be tested. The carrier 14 may be a film, a foil or a plate. It can be a flexible or rigid, transparent or translucent film. The carrier 14 may be made of polyethylene terephthalate or glass. The carrier 14 comprises a side 141 and a side 142.

The carrier 14 may be held by a support structure 15 that can be rigid or articulated, to conform best to the test environment.

A thermochromic layer 16 is present on one of the sides of the carrier 14, for example on side 141. Said side 141 where the thermochromic layer 16 is applied may be qualified as the "detection side". The other side 142 (where the thermochromic layer 16 is not applied) may be qualified as the "reading side". Results of the detection can be read on this "reading side" of the carrier by transparency. The thermochromic layer 16 provides a visual response to temperature changes. Temperature changes can be either a temperature increase or a temperature decrease. Layer 16 has an initial colour and the visual response to temperature changes occurs by changing the colour of layer 16. The advantage of thermochromic colour change is that it is even perceptible to the naked eye and occurs over a short or abrupt temperature interval. The thermochromic layer 16 may be for example a thermochromic paint layer that is applied on the side 141 of the carrier 14. Thermochromic color change temperature and carrier temperature are chosen according to the temperature of the gas in the system and is greater.

The carrier 14 also has a heater 18 on either side 141, 142 of the carrier 14. In Figure 1, the heater 18 is, for example, on the other side 142 of the carrier 14, separate from the side 141 supporting the thermochromic layer 16. Alternatively, the heater 18 can be on the same side 141 as the thermochromic layer 16. The heater 18 enables the thermochromic layer 16 to be heated. The heater 18 allows the thermochromic layer 16 to be heated without obstructing visibility through the carrier 14. The heater 18 is, for example, a transparent conductive coating. For example, it is an Indium Tin Oxide coating. Heater 18 can also be a wired conductor. It may be a very thin conductor wire that does not impede visibility through the carrier 14 - in that sense, the heater 18 can also be qualified as a transparent heater. The device 10 may comprise a power supply 20 connected to the heater 18. The power supply 20 heats the heater 18 and therefore heats the thermochromic layer 16. For example, electrodes 22 may connect the heater 18 to the power supply 20.

The method for detecting the gas emission from the system 12 comprises the step of placing the side 141 of the carrier 14 supporting the thermochromic layer 16 facing the system 12. The position of the carrier 14 is as close as possible to the system 12 for accurate detection of gas emission. The carrier 14 may be placed in contact to the system 12. Preferably, the carrier 14 is not in contact to the system 12 (due to heat transfer through contact). Advantageously, the carrier 14 is placed at less than 0.5 mm from the system 12. At that stage the thermochromic layer 16 colour is at an "unheated state" 162.

Then the method comprises the step of heating the thermochromic layer 16 with the heater 18. The thermochromic layer 16 colour changes to another colour due to an increase of temperature of the thermochromic layer 16 due to the heater 18. The method consists of heating the thermochromic layer 16 uniformly, causing it to change to its "heated state" 161 across the entire detection area. The thermochromic layer colour changes to the "heated state" 161 in the whole detection area. Then the system 12 is operated and the method comprises a step of detecting a gas emission by determining a colour change of the thermochromic layer 16. The change is viewed through the transparent or translucent carrier 14. The change of colour occurs due to the cooling of the thermochromic layer 16 by the gas emission 13 from the system 12. In other words, if there is a gas emission 13 (two gas emissions 13 being illustrated on figure 1), there is a flow of gas. This gas flow cools down the thermochromic layer 16, at least locally. In the area of the gas emission 13, the thermochromic layer 16 colour turns back to the "unheated state" 162. Results of the detector can be read on the "reading side" of the carrier 14 by transparency.

During the test, the colour distribution of the thermochromic layer 16 is detected and evaluated through the carrier 14 and the heater 18. This makes it possible to detect a gas emission 13 immediately and without dismantling the test installation. The detection and evaluation of the colour distribution is carried out using an optical device 24 (such as a camera) and/or the naked eye 26 through the carrier 14 and the heater 18. The results of the detection can be interpreted by an operator 28 or by a computer vision algorithm (30 and 32).

Advantageously, the colour change due to the cooling of the thermochromic layer 16 is reversible. This allows the detection carrier 14 to be used over and over.

As depicted on figure 1 as a matter of example, the carrier 14 may have an additional layer 34 of opaque colour paint. This additional layer 34 is optional. The thermochromic layer 16 is positioned between the additional layer 34 and the carrier 14. The additional layer 34 of color paint make it possible to adjust the level of transparency and contrast with the thermochromic layer 16. This eases the detection of the gas emission 13 as well as the positioning of the gas emission 13 within the system 12. In addition, the additional layer 34 provides mechanical resistance to the thermochromic layer 16. The additional layer 34 protects the thermochromic layer 16 against external damage, such as scratching.

The power supply 20 may be adjustable to change the sensitivity of detecting the gas emission (and thus the sensitivity of the device 10 qualified as a detector). By adjusting the power supply 20, the temperature of the thermochromic layer 16 can be varied. By delivering a low power, the heater 18 only slightly heats the thermochromic layer 16 - which nevertheless passes into the "heated state" 161. A low gas emission can therefore be detected because a slight cooling of the thermochromic layer 16 will be visible. By delivering a high power, the heater 18 heats the thermochromic layer 16 - which passes into the "heated state" 161. A strong gas emission can therefore be detected precisely because the cooling of the thermochromic layer 16 will occur locally. The power supply 20 is thus adjusted to the type of test and the type of system 12 to be tested.

The system 12 may be any system for the circulation of gas or substance, the tightness of which must be maintained during use. As indicated previously, this may be a system such as a pipeline, flange, tank, valve, etc.. For such systems, the method and device according to the invention make it possible to test gas emissions such as gas leakage. These systems may also allow a substance or gas to be ejected, and the method and device according to the invention allow the ejection capacity to be tested. For example, in the case of a valve, the gas ejection capacity can be tested.

With the system 12 being a printhead, with a matrix of ejection nozzles, ensuring the ejection of a substance such as ink (for example in powder form), the method and device 10 make it possible to test the gas emission capacity. With a gas emission in the type of a gas leakage, the method and device 10 make it possible to check that there is no gas leakage through the printhead - considered in its entirety - or through the ejection nozzles. With a gas emission in the type of a gas ejection, the method and device 10 make it possible to check that the ejection nozzles are able to eject. The substance ejection capacity can be tested by testing the gas ejection capacity instead of the powder ejection capacity. This renders the test less expensive and not toxic. The method and device 10 are an easy, reliable and fast way to test the ejection matrixes of the printhead. No personal protective equipment is necessary to wear.

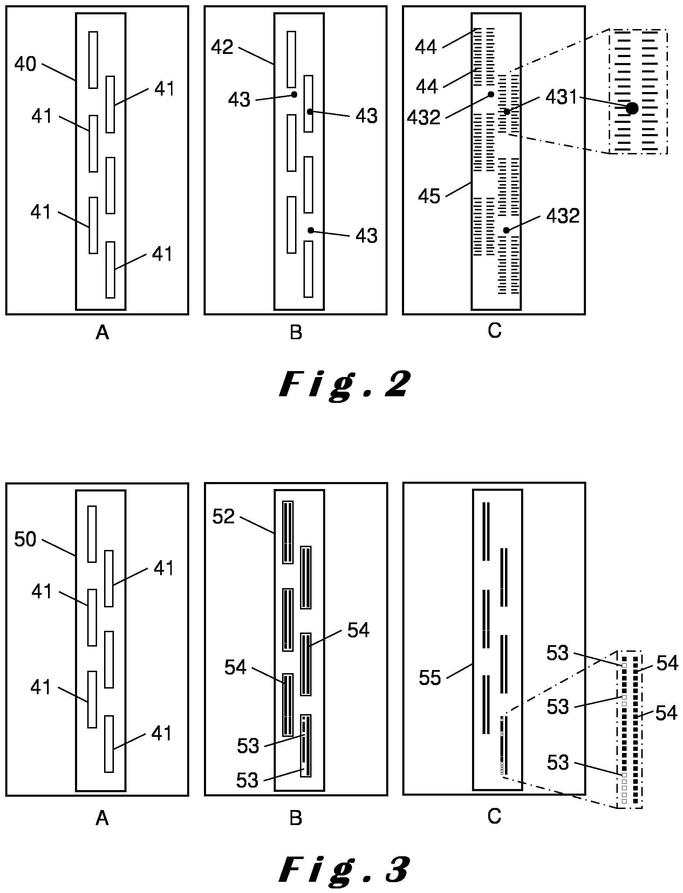

For example, to test the system 12 in the form of a printhead and its matrix of ejection nozzles, the method can implement an evaluation algorithm to detect gas emission, in the form of gas leakage - as depicted on figure 2. After heating the thermochromic layer and before operating the printhead, the method further comprising a step of taking an initial image 40 (see figure 2A) of the side of the carrier 14 supporting the thermochromic layer 16, the initial image 40 being taken through the carrier 14. The computer vision (CV) algorithm 30 for leakage detection takes the initial image 40 before starting the leakage test. On figure 2A, various matrix 41 of ejection nozzles are depicted. Operating the printhead comprises setting all of the ejection nozzles of the matrix to the closed state and then enabling an ejection pressure. Then, the method comprises the step of determining a colour change comprising taking a test image 42 (see figure 2B) of the thermochromic layer 16 through the carrier 14 after operating the printhead and identifying the areas 43 with colour changes between the test image and the initial image. The test image 42 is taken when the exposure of the leaks on the carrier 14 is optimum (e.g. after a set amount of time). The initial image 40 is subtracted to the test image 42, creating the result image 45 which enhance the areas 43 of change, where there are leakages. Thresholds and brightness adjustment are made to remove the noise and isolate the leak areas. The areas 43 in the form of spots are where leaks are detected. Elsewhere, no leak is detected.

These steps enable any gas leakage into the printhead to be detected. As the ejection nozzles are closed when the ejection pressure is applied, there is no reason for any gas to be emitted. Any emission of gas through the printhead or the ejection nozzles indicates the presence of a gas leakage. Manufacture issues can be detected at an early stage of the manufacturing process.

The center and size of each leak spot area 43 is calculated and displayed. Then, as depicted on figure 2C, the method comprises a step of correlating the area(s) 431 with colour change(s) with the nearest nozzle(s) to tag the nozzle(s) as being not able to close. Said nozzle(s) need to be closed. To that end, the result image 45 is treated and a graduated mask 44 is applied on the result image 45. The graduations 44 make it possible to correlate the area 431 with the nearest nozzle. The method may also comprise the determination of area(s) 432 of colour change that is not in an expected nozzle place. Other area(s) 432 with colour change(s) that are not expected may also give an indication of and may be correlated with a gas leakage elsewhere in the printhead (such as at a seal material, for example around the matrix). Remedial action can therefore be taken in a targeted manner.

For example again, to test the system 12 in the form of a printhead and its matrix of ejection nozzles, the method can implement an evaluation algorithm to detect gas emission, in the form of gas ejection - as depicted on figure 3. The computer vision (CV) algorithm 30 for no ejection detection is implemented. The goal is to check if all the nozzles are ejecting correctly. After heating the thermochromic layer 16 and before operating the printhead, the method further comprising a step of taking an initial image 50 (see figure 3A) of the side of the carrier 14 supporting the thermochromic layer 16, the initial image 50 being taken through the carrier 14. O figure 3A, various matrix 41 of ejection nozzles are depicted. Operating the printhead comprises setting all of the ejection nozzles of the matrix to the open state and then enabling an ejection pressure. Then, the method comprises the step of determining a colour change comprising taking a test image 52 (see figure3B) of the thermochromic layer 16 through the carrier 14 after operating the printhead and identifying the areas 53 without colour changes between the test image and the initial image. The test image 52 is taken when the exposure of the ejection on the carrier 14 is optimum (e.g. after a set amount of time). The initial image 50 is subtracted from the test image 52, resulting in image 55. In this resulting image 55, the areas 54 of change where the nozzles are effectively ejecting are enhanced, while the areas 53 without changes are also made more distinct. Thresholds and brightness adjustment are made to remove the noise and isolate the emission areas.

These steps enable any gas ejection troubles from ejection nozzles to be detected. As the ejection nozzles are open when the ejection pressure (of the powder in actual operation) is applied, gas ejection should occur from any nozzle. The absence of ejection from any ejection nozzles indicates that one or several nozzles are plugged. Manufacture issues can be detected at an early stage of the manufacturing process.

Then, as depicted on figure 3C, the method comprises a step of correlating the area(s) 53 without colour change(s) with the nearest nozzle(s) to tag the nozzle(s) as being not able to open. To that end, the result image 55 is treated and areas 53 without colour change are highlighted in a different way as areas 54 with colour change. The algorithm checks at each theoretical nozzle location if there is an area 54 of change detected. Otherwise, the areas 53 with no change are tagged as not ejecting nozzles. The highlighted areas 53 make it possible to correlate said area 53 with the nearest nozzle. Remedial action can therefore be taken in a targeted manner.

The method and device 10 can detect any gas emission (such as gas leakage or gas ejection) with a very high precision and high sensitivity. The device is also compact and thus portable. In addition, the materials needed are inexpensive. The device 10 enables simple and exact measures usable in different applications.

The present invention has been described in relation to the specific embodiments which have a value that is purely illustrative and should not be considered to be limiting. The skilled person will notice that the invention is not limited to the examples that are illustrated and/or described here above. The invention comprises each of the new technical characteristics described in the present document, and their combinations.

## Claims

1. A method for detecting a gas emission from a system (12), the method comprising the steps of
- Providing a transparent or translucent carrier (14) with a thermochromic layer (16) on one side (141) of the carrier (14) and a heater (18) on either side (141, 142) of the carrier (14), the thermochromic layer (16) having an initial colour,
- Placing the side (141) of the carrier (14) supporting the thermochromic layer (16) facing the system (12),
- Heating the thermochromic layer (16) with the heater (18), the thermochromic layer (16) colour changing to another colour due to an increase of temperature,
- Operating the system (12),
- Detecting a gas emission (13) by determining a colour change of the thermochromic layer (16) viewed through the transparent or translucent carrier (14) due to the cooling of the thermochromic layer (16) by the gas emission from the system (12).

2. The method of the preceding claim, wherein the carrier (14) has an additional layer (34) of opaque colour paint, the thermochromic layer (16) being between the opaque colour paint layer (34) and the carrier (14).

3. The method of the preceding claims, wherein a power supply (20) is adjustable to change the sensitivity of detecting the gas emission.

4. The method of any one of the preceding claims, further comprising detecting and evaluating colour distribution of thermochromic layer (16), with an optical device (24) and/or with naked eye (26), through the carrier (14) and heater (18).

5. The method of any one of the preceding claims, wherein the color change due to the cooling of the thermochromic layer (16) is reversible.

6. The method of any one of the preceding claims, wherein the gas emission is a gas leakage or a gas ejection.

7. The method of the preceding claim, wherein the system (12) is a printhead with a matrix of ejection nozzles, the method detecting gas ejection and/or gas leakage through the printhead.

8. The method of the preceding claim, comprising an evaluation algorithm comprising:
- After heating the thermochromic layer (16) and before operating the printhead, the method further comprising a step of taking an initial image (40) of the side (141) of the carrier (14) supporting the thermochromic layer (16), the initial image (40) being taken through the carrier (14),
- Operating the printhead comprises setting all of the ejection nozzles of the matrix to the closed state and then enabling an ejection pressure,
- Determining a colour change comprises taking a test image (42) of the thermochromic layer (16) through the carrier (14) after operating the printhead and identifying the areas with colour changes (43) between the test image (42) and the initial image (40).

9. The method according to the preceding claim, further comprising correlating the area(s) (431) with colour change(s) with the nearest nozzle(s) to tag the nozzle(s) as being not able to close.

10. The method according to the three preceding claims, further comprising determining area (432) of colour change that is not in an expected nozzle place and correlating said area with a leak in a sealing material of the print head.

11. The method of any one of the four preceding claims, comprising an evaluation algorithm comprising
- After heating the thermochromic layer (16) and before operating the printhead, the method further comprising a step of taking an initial image of the side (141) of the carrier (14) supporting the thermochromic layer (16), the initial image (50) being taken through the carrier (14),
- Operating the printhead comprises setting all of the ejection nozzles of the matrix to the eject state and then enabling an ejection pressure,
- Determining a colour change comprises taking a test image (52) of the thermochromic layer (16) through the carrier (14) after operating the printhead and identifying the areas without colour changes (53) between the test image (52) and the initial image (50).

12. The method according to the preceding claim, further comprising correlating the area(s) (53) without colour change(s) with the nearest nozzle(s) to tag the nozzle(s) as being not able to eject.

13. A detecting device (10) to detect gas emission (13) from a system (12), the device comprising
- a transparent or translucent carrier (14),
- a transparent or translucent heater (18) on either side (141, 142) of the carrier (14),
- a thermochromic layer (16) on one side (141) of the carrier (14), the thermochromic layer (16) having an initial colour, the thermochromic layer colour being configured
∘ to change to another colour due to an increase of temperature caused by the heater (18), and
∘ to change to the initial color due to the cooling of the thermochromic layer (16) by the gas emission from the system (12).

14. The device (10) of the preceding claim, wherein the carrier (14) is rigid or flexible and/or is held by a support structure (15) that is rigid or articulated.

15. The device (10) of the two preceding claims, wherein the heater (18) is a transparent conductive coating or a wired conductor.
